# EUROPEAN PATENT APPLICATION

(11) **EP 4 712 302 A1**
(43) Date of publication of application: **18.03.2026**
(21) Application number: 25201920.3
(22) Date of filing: 12.09.2025
(51) Int. Cl.: H02J 7/00

(54) **HIGH-VOLTAGE BOX POWER SUPPLY SYSTEM AND ENERGY STORAGE SYSTEM**

(30) Priority: 14.09.2024 CN 202422268357 U; 03.12.2024 WO PCT/CN2024/136362
(71) Applicant: Eve Energy Storage Co., Ltd, Wuhan, Hubei 430000 (CN)
(72) Inventor: Chen, Dong, Wuhan, 430000 (CN)
(74) Representative: Nederlandsch Octrooibureau

(57) **Abstract**

The present disclosure provides a high-voltage box power supply system and an energy storage system, where the high-voltage box power supply system is applied to the energy storage system and includes: a power supply; and a plurality of high-voltage boxes; where the power supply is electrically connected to one of the plurality of high-voltage boxes, and the plurality of high-voltage boxes are electrically connected to each other in sequence, so that the power supply supplies power to the plurality of high-voltage boxes.

## Description

### TECHNICAL FIELD

The present disclosure relates to the field of energy storage technologies, and more particular to a high-voltage box power supply system and an energy storage system.

### BACKGROUND

In an energy storage system, a plurality of battery cells are connected in series in a battery pack, a plurality of battery packs are connected in series to form a battery cluster, and the battery cluster is electrically connected to a high-voltage box; where, a main function of the battery cluster is to store and supply electrical energy, and a main function of the high-voltage box is to control connection or disconnection of a main circuit of the energy storage system.

The high-voltage box is a device that integrates various high-voltage components to ensure transmission of power electric energy of the energy storage system and detects insulation faults, open-circuit faults, ground faults, high-voltage faults, and the like of an entire high-voltage system at any time.

However, a plurality of battery clusters and a plurality of high-voltage boxes are integrated in one energy storage container, so that the number of power distribution lines between the plurality of battery clusters and the plurality of high-voltage boxes is more and the wiring of the power distribution lines is complicated.

### SUMMARY

The present disclosure provides a high-voltage box power supply system applied to an energy storage system, including: a power supply; and a plurality of high-voltage boxes; where the power supply is electrically connected to one of the plurality of high-voltage boxes, and the plurality of high-voltage boxes are electrically connected to each other in sequence, so that the power supply supplies power to the plurality of high-voltage boxes.

The present disclosure further provides an energy storage system, including: at least one power supply; a power distribution cabinet; and a plurality of high voltage boxes; where the power distribution cabinet is provided with an electrical connection between the power supply and the high-voltage boxes and includes at least one power distribution interface, and the power distribution interface is in one-to-one correspondence with the power supply; a plurality of power distribution lines are formed between the at least one power supply and the plurality of high-voltage boxes, and at least one of the plurality of power distribution lines is provided based on a high-voltage box power supply system.

### Beneficial Effects

According to the high-voltage box power supply system provided in the present disclosure, one power supply supplies power to a plurality of high-voltage boxes via an electrical connection between the high-voltage boxes, so that a connection cable between the power supply and the high-voltage boxes is reduced and it is advantageous for wiring within the energy storage container.

### DESCRIPTION OF THE DRAWINGS

FIG. 1 is a schematic structural diagram of a high-voltage box power supply system according to the present disclosure.
FIG. 2 is a schematic structural diagram of interconnection between a plurality high-voltage boxes according to the present disclosure.
FIG. 3 is a schematic structural diagram of a high-voltage box power supply system having specific high-voltage box structures according to the present disclosure.
FIG. 4 is a schematic structural diagram of a high-voltage box power supply system having high-voltage boxes connected in parallel according to the present disclosure.
FIG. 5 is a schematic structural diagram of an energy storage system according to the present disclosure.

### REFERENCE NUMERALS OF THE ACCOMPANYING DRAWING:

10. High-voltage box power supply system; 100. Power supply; 200. High-voltage box; 300. Switching power supply; 400 Main control board; 20. Energy storage system; 500. Power distribution cabinet; A. First power supply interface; B. Second power supply interface; K. Breaker; J. Contactor; F. Fuse; and H. Hall sensor.

### DETAILED DESCRIPTION

In the related art, one power supply is generally used to supply power to one high-voltage box and needs a power supply interface to reserve a power distribution cabinet to complete a power distribution connection with the high-voltage box, and a plurality of power supplies are integrated in an energy storage container, so that the power distribution cabinet needs to reserve more power supply interfaces to complete the power distribution connection. As the number of power supply interfaces of the power distribution cabinet is increased, the volume of the power distribution cabinet is increased correspondingly. In addition, an internal space of the energy storage container is limited, and too many wiring harnesses connected with the power distribution cabinet are not conducive to wiring.

An embodiment of the present disclosure provides a high-voltage box power supply system for simplifying a power distribution line arrangement between a power supply and high-voltage boxes.

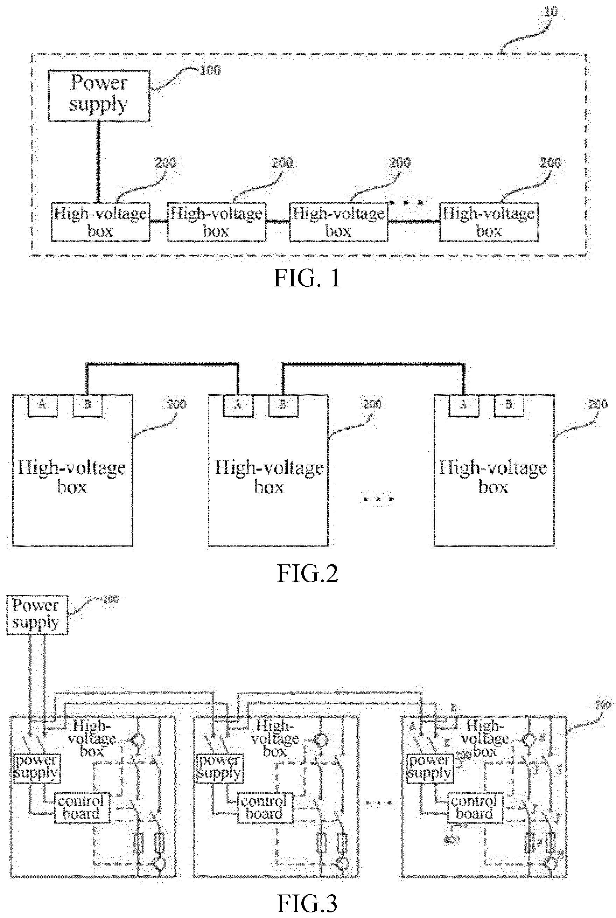

Referring to FIG. 1, which is a schematic structural diagram of a high-voltage box power supply system according to the present disclosure. The high-voltage box power supply system 10 provided in the present embodiment is applied to an energy storage system and includes a power supply 100 and a plurality of high-voltage boxes 200. The power supply 100 is electrically connected to one 200 of the plurality of high-voltage boxes 200, and the plurality of high-voltage boxes 200 are electrically connected to each other in sequence, so that the power supply 100 supplies power to the plurality of high-voltage boxes 200.

Specifically, it is assumed that the plurality of high-voltage boxes 200 respectively refer to a high-voltage box 1, a high-voltage box 2, and a high-voltage box 3..., and a high-voltage box N; and the plurality of high-voltage boxes 200 are electrically connected to each other in sequence, that is, the high-voltage box 1 is electrically connected to the high-voltage box 2, and the high-voltage box 2 is electrically connected to the high-voltage box 3... ,the high-voltage box i is electrically connected to the high-voltage box (i+1)..., and the high-voltage box (N-1) is electrically connected to the high-voltage box N. Where N is an integer greater than 0 and i is any integer between 1 and N. The power supply 100 is electrically connected to the high-voltage box 1 to supply power to the high-voltage box 1, the power supply 100 supplies power to the high-voltage box 2 based on transfer of the high-voltage box 1, the power supply 100 supplies power to the high-voltage box 3 based on the transfer of the high-voltage box 2..., the power supply 100 supplies power to the high-voltage box (i+1) based on the transfer of the high-voltage box i..., and the power supply 100 supply power to the high voltage box N based on the transfer of the high voltage box (N-1).

According to the high-voltage box power supply system 10 provided in the present embodiment, one power supply 100 supplies power to a plurality of high-voltage boxes 200 via an electrical connection between the high-voltage boxes 200, so that a connection cable between the power supply 100 and the high-voltage boxes 200 is reduced and it is advantageous for wiring within the energy storage container.

In some embodiments, the power supply 100 is arranged based on a battery pack or a battery cluster.

In some embodiments, referring to FIG. 2, which is a schematic structural diagram of interconnection between a plurality high-voltage boxes according to the present embodiment. Each of the plurality of high-voltage boxes 200 includes a first power supply interface A and a second power supply interface B, and the plurality of high-voltage boxes 200 electrically connected to each other in sequence includes a first level high-voltage box, a second level high-voltage box ..., and up to the Nth level high-voltage box, where the second power supply interface B of the i-th level high-voltage box is connected to the first power supply interface A of the (i+1)-th level high-voltage box. That is, the plurality of high-voltage boxes 200 are connected in a daisy chain arrangement. Where N is an integer greater than 0 and i is any integer between 1 and N. By providing the first power supply interface A and the second power supply interface B in each of the high-voltage boxes 200 provided in the present embodiment to interconnect the plurality of high-voltage boxes, a single power supply 100 can supply power to the plurality of high-voltage boxes 200.

For the example of FIG. 2, in one example, the power supply 100 is connected to the first power supply interface A of the first level high-voltage box to realize power supply to the plurality of high-voltage boxes 200. In another example, the power supply 100 is connected to the second power supply interface B of the Nth level high-voltage box to realize power supply to the plurality of high-voltage boxes 200. In yet another example, the power supply 100 is connected to the first power supply interface A of the first level high-voltage box and the second power supply interface B of the Nth level high-voltage box to realize power supply to the plurality of high-voltage boxes 200. The power supply 100 connected to the first power supply interface A of the first level high-voltage box and the second power supply interface B of the Nth level high-voltage box may be the same power supply 100 or different power supplies 100.

Referring to FIG. 3, which is a schematic structural diagram of a high-voltage box power supply system having specific high-voltage box structures according to the present embodiment. The high-voltage box 200 according to the present embodiment includes a box structure, and the first power supply interface A and the second power supply interface B are provided outside the box structure, and the first power supply interface A and the second power supply interface B are electrically connected with each other inside the high-voltage box 200. A breaker K is connected to the first power supply interface A inside the box. Since the first power supply interface A and the second power supply interface B are electrically connected with each other inside the high-voltage box 200, the breaker K is further connected to the second power supply interface B inside the box. The breaker K is configured to conduct a power supply path between the first power supply interface A and the second power supply interface B based on a control signal. A switching power supply 300 is connected to the breaker K inside the box. A main control board 400 is connected to the switching power supply inside the box.

Specifically, the breaker K functions as a switch for connecting a path between the high-voltage box 200 and the power supply 100. When the breaker K is turned on, the power supplied from the power supply 100 can flow through the high-voltage box 200. When the breaker K is turned off, the power supply 100 cannot supply power to the high-voltage box 200.

A switching power supply 300 is used for power conversion inside the high-voltage box 200 to convert a voltage value supplied from the power supply 100 to a voltage value that can be adapted to the high-voltage box 200. In one example, the switching power supply 300 may be provided based on a DC/DC isolation circuit, where the DC/DC isolation circuit may implement boosting or bucking of a voltage value provided by the power supply 100 to obtain a voltage value to which the high-voltage box 200 may be adapted.

In one example, a main control board 400 is used to implement a function of a Battery Management System (BMS). Specifically, the main control board 400 controls respective function circuits to be turned on or off by controlling turning on or off of the contactor J.

It should be noted that the energy storage system is based on an alternating current transmission, and therefore a connection cable between the power supply 100 and the high-voltage box 200 and a transmission cable between the high-voltage boxes 200 are based on two-wire transmission to adapt to the alternating current transmission.

It should also be noted that the example shown in the FIG. 3 does not make a limitation to positions for the first power supply interface A and the second power supply interface B. In some embodiments, the first power supply interface A and the second power supply interface B are disposed on opposite sides of the box structure, respectively. By disposing the first power supply interface A and the second power supply interface B on the opposite sides of the box structure to facilitate interconnection wiring between the high-voltage boxes 200, it is more advantageous for wiring inside the energy storage container.

In some embodiments, both the first power supply interface A and the second power supply interface B meet an IP65 protection level, so that the entire high-voltage box 200 meets the IP65 protection level.

In some embodiments, the high-voltage box 200 further includes a fuse F, and a main function of the fuse F in the high-voltage box 200 is to protect a circuit from overload or short-circuit current, which operates on the basis of a thermal effect of the current. When the current flowing through the fuse F exceeds a rated current value of the fuse F, a temperature of a metal conductor inside the fuse F rises rapidly, and the metal conductor melts to form an open circuit when the temperature of the metal conductor reaches a certain temperature, thereby cutting off the larger current. In one example, a basic structure of the fuse F includes three portions: a melt, a housing, and a support. Where, the melt is a key element for controlling a fusing characteristic of the fuse F, and a material of the melt is usually a material having a low melting point such as lead and a lead alloy, or a material having a high melting point such as copper and silver. The melt maintains a solid state during a normal operation of a circuit, and when an overload or a short circuit occurs in the circuit, a current exceeds the melting point of the melt, causing the melt to melt and vaporize, resulting in a fracture and protection of the circuit.

In some embodiments, the high-voltage box 200 also includes a Hall sensor H that measures a strength of a magnetic field using a Hall effect. When a conductor moves in a magnetic field perpendicular to a current direction, an electromotive force (i.e., a Hall voltage) is generated on a side surface of the conductor, of which a voltage is positively proportional to the strength of the magnetic field. Therefore, by measuring the Hall voltage, the presence and variation of the magnetic field can be accurately detected. In the high-voltage box 200, the Hall sensor H is commonly used for measurement of a current and a voltage. In one example, a Hall-effect current sensor having certain high-performance, such as CC6920B, within which high-precision, low-noise linear Hall circuits and low-impedance main current conductors are integrated, can provide a measurement range of up to 50 A, and have high bandwidth and fast response characteristics.

In a specific application scenario, a control signal for controlling turning on or off of the breaker K is provided based on a controller of a product to which the high-voltage phase power supply system 10 belongs, so as to implement power-up or power-down of the controller to the high-voltage box 200. In another specific application scenario, the breaker K is configured as a Manual Service Disconnect (MSD), which is a manual power-off device for a high-voltage system of a new-energy electric vehicle and a main function of which is to cut off the power supply of the high-voltage system by pulling out or operating the switch, thereby achieving an electrical isolation and ensuring the safety of the maintenance personnel.

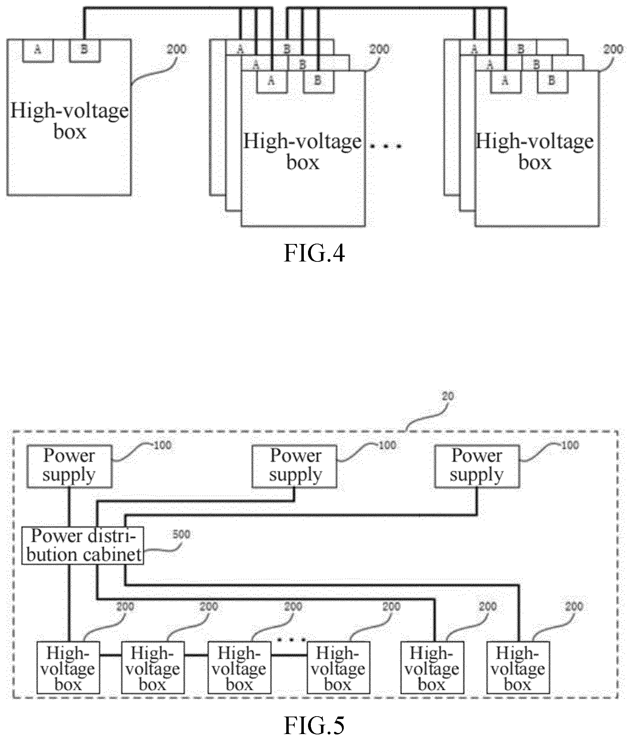

In some embodiments, the i-th level high-voltage box includes at least one high-voltage box 200. Specifically, referring to FIG. 4, which is a schematic structural diagram of a high-voltage box power supply system having high-voltage boxes connected in parallel according to the present embodiment. In an example of FIG. 4, the second level high-voltage box and the Nth level high-voltage box each include three high-voltage boxes 200 connected to a next level high-voltage box through the same connection cable. The present embodiment extends a connection mode of the high-voltage boxes in the high-voltage box power supply system 10 provided in the present embodiment by providing the high-voltage boxes 200 connected in parallel.

In some embodiments, specifications of the first power supply interface A and the second power supply interface B are different from each other, and accordingly, joint specifications of connection cables connected to the first power supply interface A and the second power supply interface B are different from each other, so that the wiring correctness can be more easily detected through the different specifications of the interfaces and different joint specifications, thereby facilitating the maintenance of the high-voltage box power supply system 10.

It is assumed that N high-voltage boxes exist in the high-voltage box power supply system 10 provided in the present embodiment, the current required for each of the high-voltage boxes is I, and a voltage drop of the current I on the connection cable between the power supply source 100 and the high-voltage box 200 is V. Due to the arrangement of the daisy chain structure of the high-voltage boxes, a current of the connection cable between the power supply 100 and the high-voltage boxes 200 is I*N, and accordingly, a voltage drop V of the connection cable between the power supply 100 and the high-voltage box 200 is increased, thereby reducing a power supply voltage received by the high-voltage box 200. However, due to the arrangement of the switching power supply 300 inside the high-voltage box 200, an input voltage of the switching power supply 300 is in a wide range, and the received power supply voltage can be boosted, so that the influence of the voltage drop on the power supply circuit can be avoided.

In some embodiments, power supply lines of the high-voltage box power supply system 10 include a first type of power supply line for a power distribution connection between the power supply source 100 and the high-voltage box 200 and a second type of power supply line for a power distribution connection between a plurality of high-voltage boxes, where a specification of the first type of power supply line is not less than that of the second type of power supply line. Specifically, a current flowing through the first type of power supply line is greater than a current flowing through the second type of power supply line. Therefore, the power supply safety of the high-voltage box power supply system 10 can be ensured by setting a specification of the first type of power supply line to be not less than a cable configuration of the second type of power supply line.

According to the high-voltage box power supply system 10 provided in the present embodiment, one power supply 100 supplies power to a plurality of high-voltage boxes 200 via an electrical connection between the high-voltage boxes 200, so that a connection cable between the power supply 100 and the high-voltage boxes 200 is reduced and it is advantageous for wiring within the energy storage container.

Another embodiment of the present disclosure provides an energy storage system for simplifying the arrangement of power distribution lines between a power distribution cabinet and high-voltage boxes, reducing the number of power supply interfaces reserved by the power distribution cabinet, reducing the size of the power distribution cabinet, and making better use of the limited space of a container.

Referring to FIG. 5, which is a schematic structural diagram of an energy storage system according to the present embodiment. An energy storage system 20 includes: at least one power supply 100; a power distribution cabinet 500; and a plurality of high voltage boxes 200; where the power distribution cabinet 500 is configured for an electrical connection between the power supply 100 and the high-voltage boxes 200 and includes at least one power distribution interface, and the power distribution interface is in one-to-one correspondence with the power supply 100; a plurality of power distribution lines are formed between the at least one power supply 100 and the plurality of high-voltage boxes 200, and at least one of the plurality of power distribution lines is provided based on the high-voltage box power supply system 10.

Specifically, the power distribution cabinet 500 is used to electrically connect the power supply 100 with the high-voltage boxes 200, and the power distribution interface in the power distribution cabinet 500 is correspondingly connected to the power supply 100. That is, how many power distribution interfaces are integrated in the power distribution cabinet 500, how many power supply supplies 100 are provided in the energy storage container, and the high-voltage boxes 200 are connected to the power supplies by connecting the power distribution interfaces with the power supplies.

According to the energy storage system provided in the present embodiment, one-to-one power supply more from the power supply 100 to the high-voltage box 200 is provided, and one-to-many power supply mode from the power supply 100 to the high-voltage boxes 200 is further provided. As can be seen from the foregoing that the high-voltage box power supply system 10 reduces the connection cables between the power supply source 100 and the high-voltage boxes 200, and it is advantageous for wiring within the energy storage container. In addition, one-to-many power supply mode from the power supply 100 to the high-voltage boxes 200 can reduce the number of the power supplies 100, reduce the number of power supply interfaces reserved by the power distribution cabinet, reducing the size of the power distribution cabinet, and making better use of the limited space of a container.

In some embodiments, the power supply 100 is arranged based on a battery pack or a battery cluster.

In some embodiments, the number of power distribution interfaces is less than the number of high-voltage boxes to ensure that the one-to-many power supply mode from the power supply 100 to the high voltage boxes 200 is provided in the energy storage system 20, which may reduce the number of power supply supplies 100.

In some embodiments, specifications of the first power supply interface A and the second power supply interface B are different from each other, and accordingly, joint specifications of connection cables connected to the first power supply interface A and the second power supply interface B are different from each other, so that the wiring correctness can be more easily detected through the different specifications of the interfaces and different joint specifications, thereby facilitating the maintenance of the energy storage system 20.

In some embodiments, each of the plurality of high-voltage boxes 200 includes a first power supply interface A and a second power supply interface B, and the first power supply interface A and the second power supply interface B are provided on opposite sides of the box structure of the high-voltage box, respectively. By disposing the first power supply interface A and the second power supply interface B on the opposite sides of the box structure to facilitate interconnection wiring between the high-voltage boxes 200, it is more advantageous for wiring inside the energy storage container.

The energy storage system 20 includes the high-voltage box power supply system 10, and it is assumed that N high-voltage boxes exist in the high-voltage box power supply system 10 provided in the present embodiment, the current required for each of the high-voltage boxes is I, and a voltage drop of the current I on the connection cable between the power supply source 100 and the high-voltage box 200 is V. Due to the arrangement of the daisy chain structure of the high-voltage boxes, a current of the connection cable between the power supply 100 and the high-voltage boxes 200 is I*N, and accordingly, a voltage drop V of the connection cable between the power supply 100 and the high-voltage box 200 is increased, thereby reducing a power supply voltage received by the high-voltage box 200. However, due to the arrangement of the switching power supply 300 inside the high-voltage box 200, an input voltage of the switching power supply 300 is in a wide range, and the received power supply voltage can be boosted, so that the influence of the voltage drop on the power supply circuit can be avoided.

In some embodiments, power supply lines of the energy storage system 20 include a first type of power supply line for a power distribution connection between the power supply interface and the high-voltage box 200 and a second type of power supply line for a power distribution connection between a plurality of high-voltage boxes 200, where a specification of the first type of power supply line is not less than that of the second type of power supply line. Specifically, a current flowing through the first type of power supply line is greater than a current flowing through the second type of power supply line. Therefore, the power supply safety of the high-voltage box power supply system 10 can be ensured by setting a specification of the first type of power supply line to be not less than a cable configuration of the second type of power supply line.

In some embodiments, both the first power supply interface A and the second power supply interface B meet an IP65 protection level, so that the entire high-voltage box 200 meets the IP65 protection level to enable the energy storage system to meet the IP65 protection level.

According to the energy storage system provided in the present embodiment, one-to-many power supply mode from the power supply 100 to the high-voltage boxes 200 can reduce the number of the power supplies 100, reduce the number of power supply interfaces reserved by the power distribution cabinet, reducing the size of the power distribution cabinet, and making better use of the limited space of a container.

## Claims

1. A high-voltage box power supply system (10) applied to an energy storage system, comprising:
a power supply (100); and
a plurality of high-voltage boxes (200);
wherein the power supply (100) is electrically connected to one of the plurality of high-voltage boxes (200); and
wherein the plurality of high-voltage boxes (200) are electrically connected to each other in sequence, so that the power supply (100) supplies power to the plurality of high-voltage boxes (200).

2. The system (10) of claim 1, wherein:
each of the plurality of high-voltage boxes (200) comprises a first power supply interface (A) and a second power supply interface (B);
the plurality of high-voltage boxes (200) electrically connected to each other in sequence comprise a first level high-voltage box, a second level high-voltage box, ..., and up to a N-th level high-voltage box;
a second power supply interface (B) of an i-th level high-voltage box is connected to a first power supply interface (A) of an (i+1)-th level high-voltage box; and
N is an integer greater than 0 and i is any integer between 1 and N.

3. The system (10) of claim 2, wherein the i-th level high-voltage box comprises at least one high-voltage box (200).

4. The system (10) of claim 2 or 3, wherein the power supply (100) is connected to at least one of a first power supply interface (A) of the first level high-voltage box and a second power supply interface (B) of the Nth level high-voltage box.

5. The system (10) of any one of claims 2-4, wherein the each of the plurality of high-voltage boxes (200) further comprises:
a box structure, wherein the first power supply interface (A) and the second power supply interface (B) are provided outside the box structure, and the first power supply interface (A) and the second power supply interface (B) are electrically connected to each other inside the high-voltage box (200);
a breaker (K) connected to the first power supply interface (A) inside the high-voltage box (200) and configured to conduct a power supply path between the first power supply interface (A) and the second power supply interface (B) based on a control signal;
a switching power supply (300) connected to the breaker (K) inside the high-voltage box (200); and
a main control board (400) connected to the switching power supply (300) inside the high-voltage box (200).

6. The system (10) of any one of claims 2-5, wherein the each of the plurality of high-voltage boxes (200) further comprises: a fuse (F) and a Hall sensor (H).

7. The system (10) of any one of claims 2-6, wherein a specification of the first power supply interface (A) and a specification of the second power supply interface (B) are different from each other.

8. The system (10) of claim 7, wherein a current flowing through the first power supply interface (A) is greater than a current flowing through the second power supply interface (B).

9. The system (10) of any one of claims 2-8, wherein both the first power supply interface (A) and the second power supply interface (B) meet an IP65 protection level.

10. The system (10) of any one of claims 1-9, wherein the power supply (100) is arranged based on a battery pack or a battery cluster

11. An energy storage system (20), comprising:
at least one power supply (100);
a power distribution cabinet (500); and
a plurality of high voltage boxes (200);
wherein the power distribution cabinet (500) is provided with an electrical connection between the power supply (100) and the high-voltage boxes (200) and comprises at least one power distribution interface, and the at least one power distribution interface is in one-to-one correspondence with the at least one power supply (100); and
wherein a plurality of power distribution lines are formed between the at least one power supply (100) and the plurality of high-voltage boxes (200), and at least one of the plurality of power distribution lines is provided based on the high-voltage box power supply system (10) of any one of claims 1-10.

12. The system (20) of claim 11, wherein a number of power distribution interfaces is less than a number of the high-voltage boxes (200).

13. The system (20) of claim 11 or 12, wherein each of the plurality of high-voltage boxes (200) comprises a first power supply interface (A) and a second power supply interface (B), and a specification of the first power supply interface (A) and a specification of the second power supply interface (B) are different from each other.

14. The system (20) of any one of claims 11-13, wherein each of the plurality of high-voltage boxes (200) comprises a first power supply interface (A) and a second power supply interface (B), and the first power supply interface (A) and the second power supply interface (B) are disposed on opposite sides of a box structure of the each high-voltage box (200), respectively.

15. The system (20) of any one of claims 11-14, further comprising:
a first type of power supply line configured for a power distribution connection between the power distribution interface and the high-voltage boxes (200); and
a second type of power supply line configured for a power distribution connection between the plurality of high-voltage boxes (200);
wherein a specification of the first type of power supply line is not less than a specification of the second type of power supply line.
